Europäisches Patentamt

(19) European Patent Office

Office européen des brevets

(11) Numéro de publication: **0 287 606**
**B1**

(12) **FASCICULE DE BREVET EUROPEEN**

(45) Date de publication du fascicule du brevet: **12.09.90**

(51) Int. Cl.$^5$: **B 62 C 1/08**

(21) Numéro de dépôt: **87906671.0**

(22) Date de dépôt: **05.10.87**

(86) Numéro de dépót international:
**PCT/FR87/00379**

(87) Numéro de publication internationale:
**WO 88/02328 07.04.88 Gazette 88/08**

(54) **VEHICULE A DEUX ROUES DU TYPE SULKY.**

(30) Priorité: **03.10.86 FR 8613821**

(43) Date de publication de la demande:
**26.10.88 Bulletin 88/43**

(45) Mention de la délivrance du brevet:
**12.09.90 Bulletin 90/37**

(84) Etats contractants désignés:
**AT BE CH DE FR GB IT LI NL SE**

(56) Documents cités:
**DE-A-2 748 437**
**US-A-3 771 810**
**US-A-4 313 611**

(73) Titulaire: **PREVILLE, Pierre**
**Oléandres 3, rue de Lamartine**
**F-06150 Cannes-la-Bocca (FR)**

(73) Titulaire: **LOPORCARO, Michel**
**5, avenue Janvier-Passero**
**F-06210 Mandelieu (FR)**

(72) Inventeur: **THORN, Jean-Eric**
**249, avenue des Soles**
**F-06250 Mougins (FR)**

(74) Mandataire: **Nony, Michel et al**
**Cabinet NONY & CIE, 29, rue Cambacérès**
**F-75008 Paris (FR)**

Courier Press, Leamington Spa, England.

**Description**

La présente invention a pour objet un véhicule à deux roues du type sulky, utilisé dans les courses de trot attelé.

On sait que les véhicules de type sulky sont constitués essentiellement par un pont dont la partie supérieure centrale est aménagée pour recevoir un siège pour le conducteur tandis que les roues sont fixées à l'extrémité inférieure des branches latérales dudit pont. Le pont se présente sous la forme de tubes métalliques soudés. Généralement, cette structure est renforcée par d'autres tubes ou barres, également soudés. Il en résulte que le sulky comporte une véritable ramification de tubes et de barres dont la fabrication et éventuellement la réparation sont relativement complexes.

Les nombreuses soudures présentes dans de telles structures tubulaires constituent autant de points de rupture potentiels qui peuvent être à l'origine d'accidents graves.

Il peut aussi arriver que le sabot d'un cheval s'introduise accidentellement dans les espaces situés entre les tubes ou barres d'un sulky voisin, ce qui peut être également à l'origine de graves accidents. Les risques sont particulièrement élevés lors d'un dépassement maladroit, et aussi lors du départ de la course, alors que les concurrents sont alignés sur un front nettement plus large que la piste proprement dite et sont donc amenés à resserrer ce front pour accéder à la piste.

Il peut également arriver que deux roues de sulkys voisins viennent à se toucher. Dans ce cas, les roues peuvent s'engrener en projetant vers l'avant le sulky placé en retrait, qui est alors déstabilisé, avec rique de chute du conducteur.

La présente invention a pour objet un véhicule à deux roues, du type sulky, permettant de remédier à ces divers inconvénients. Ce véhicule, qui comprend un plateau transversal, en matériau composite, comportant vers l'avant deux prolongements latéraux constituant les brancards ou l'amorce des brancards, ledit plateau transversal étant muni d'un siège ou de moyens de fixation d'un siège pour le conducteur, et étant assemblé avec deux fourches pour la fixation des roues, est caractérisé par le fait que chaque fourche, réalisée en matériau composite, a une structure de coffrage et comprend deux panneaux latéraux en regard reliés par au moins deux éléments écarteurs transversaux en forme de plaques.

Chacun des documents US—A—3 771 810 et DE—A—2 748 437 décrit un véhicule qui possède toutes les caractéristiques précisées dans la première partie de la revendication 1.

Le plateau transversal peut comporter à l'arrière un prolongement médian, éventuellement incliné vers le haut, destiné à recevoir le siège du conducteur.

Le plateau transversal, y compris ses prolongements avant et arrière, peut être réalisé en une seule pièce, et peut être muni de nervures de rigidité réalisées également en matériau composite.

Le plateau transversal unique peut être remplacé par deux plateaux: un plateau transversal proprement dit, de forme sensiblement rectangulaire, et un plateau supérieur longitudinal fixé par sa partie médiane sur ledit plateau transversal à l'aide de moyens de fixation appropriés, ledit plateau supérieur étant adapté pour recevoir à son extrémité arrière un siège pour le conducteur et comportant en outre, vers l'avant, deux prolongements en forme de bras longitudinaux destinés à la fixation de brancards amovibles. Comme précédemment, l'extrémité arrière, destinée à recevoir le siège, est de préférence inclinée vers le haut, par rapport au plan de la partie médiane. En outre, dans ce mode de réalisation, le plateau transversal peut être remplacé par deux demi-plateaux disposés symétriquement par rapport à l'axe longitudinal du véhicule, chaque demi-plateau reposant sur une desdites fourches. Bien entendu, le plateau transversal et le plateau supérieur sont réalisés, comme précédemment, en matériau composite et peuvent être renforcés à l'aide de nervures de rigidité appropriées.

Les prolongements latéraux avant peuvent constituer les brancards et être réalisés d'une seule pièce avec le plateau transversal. Les prolongements avant peuvent aussi être plus courts et être munis à leur extrémité avant de moyens de fixation pour des brancards amovibles. Ils peuvent être munis, du côté intérieur, d'une cale-pied classique, mais, comme on le verra ci-après, celui-ci n'est pas toujours nécessaire.

Une caractéristique importante du véhicule est que les fourches de roues sont constituées de deux panneaux latéraux munis de deux éléments écarteurs transversaux en forme de plaques maintenant les deux panneaux écartés l'un de l'autre de façon à laisser entre les deux panneaux un espace suffisant pour le passage de la roue. Les fourches de roues ont donc une structure du type "coffrage" qui non seulement assure une rigidité suffisante de l'ensemble, mais encore présente d'autres avantages qui seront mentionnés ci-après.

Les matériaux composites constituant les plateaux et les fourches du sulky de l'invention sont de préférence des matériaux composites de type sandwich, c'est-à-dire des matériaux constitués d'une âme (par exemple mousse synthétique rigide ou structure dite en nid d'abeilles) renforcée extérieurement par un stratifiée constitué de fibres ou de tissus liés avec une résine appropriée. L'âme est par exemple en mousse de polychlorure de vinyle ou de polyuréthane. Les stratifiés (sous forme de fibres, mats ou tissus) sont réalisés par exemple à l'aide de fibres de verre, de carbone ou de kevlar (fibre de polyamide aromatique commercialisée par du Pont de Nemours). La résine, qui sert à la fois de liant pour le stratifié et de colle de fixation du stratifié sur l'âme du composite, est une résine usuelle comme par exemple une résine époxy, une résine polyester ou une résine phénolique.

Selon un permier mode de réalisation, les panneaux latéraux des fourches ont une forme sensiblement triangulaire et sont fixés à la face inférieure du plateau transversal par un de leurs côtés, le sommet opposé audit côté constituant l'extrémité inférieure du panneau. Cette extrémité inférieure est munie de moyens de fixation de l'axe de roue, par exemple une ferrure.

De préférence, les panneaux triangulaires ont une forme allongée vers l'avant. Dans ce cas, il est nécessaire que les prolongements avant du plateau transversal (partie postérieure des brancards) soient situés dans le plan des roues de façon que le contact du panneau avec le plateau transversal se fasse, au-delà dudit plateau proprement dit, avec la face inférieure de la partie postérieure du brancard.

Dans ce premier mode de réalisation, les deux éléments écarteurs peuvent être situés respectivement à l'avant et à l'arrière des panneaux latéraux, entre les deux panneaux de la fourche et perpendiculairement à ceux-ci, par exemple le long des côtés avant et arrière desdits panneaux. Ces éléments écarteurs subissent éventuellement une découpe appropriée pour permettre le passage de la roue lorsqu'ils se trouvent à la verticale de celle-ci.

Lorsque les panneaux triangulaires ont une forme allongée vers l'avant, on peut fixer un élément de carénage en forme de "V" arrondi, reliant les côtés avant des deux panneaux de la fourche, ce carénage étant réalisé par exemple en tissu de verre imprégné de résine. On peut aussi donner à l'élément écarteur avant une section appropriée pour constituer un carénage avant de la roue. On peut également fixer un élément de carénage arrière joignant les côtés arrière des deux panneaux latéraux et enveloppant la partie supérieure de la roue.

Selon un second mode de réalisation, chaque panneau latéral des fourches a une forme trapézoïdale, la grande base du trapèze étant fixée sur la face inférieure du plateau transversal et du prolongement avant correspondant, tandis que la petite base constitue la partie inférieure du panneau, étant entendu que l'extrémité avant de la grande base est située plus en avant que l'extrémité avant de la petite base. La petite base comporte, au voisinage de son extrémité arrière, des moyens de fixation de l'axe de roue, par exemple une ferrure.

Les éléments écarteurs peuvent être placés, comme précédemment, à l'avant et à l'arrière des panneaux. Il est toutefois intéressant de prévoir deux éléments écarteurs de forme rectangulaire situés en avant des roues, entre les deux panneaux et perpendiculairement à ceux-ci: un premier élément écarteur situé (comme précédemment) le long des côtés avant des panneaux, et un second élément écarteur incliné vers l'arrière depuis son côté inférieur fixé sur le premier élément écarteur jusqu'à son côté supérieur fixé sur la face inférieure du prolongement avant du panneau transversal. On réalise ainsi à l'extrémité avant de la fourche un coffrage de section triangulaire qui peut constituer un logement pour les pieds du conducteur après découpe d'une ouverture appropriée, en avant du second élément écarteur, dans le panneau latéral intérieur. Les pieds du conducteur peuvent ainsi prendre appui sur le premier élément écarteur, tandis que le second élément écarteur, situé en arrière du pied, protège celui-ci contre les projections d'eau ou de boue.

Comme précédemment, les fourches peuvent recevoir un carénage avant et arrière, étant entendu que l'élément écarteur avant peut avoir une section appropriée pour constituer le carénage avant.

Bien entendu, dans ce second mode de réalisation, les prolongements avant du plateau transversal doivent être situés sensiblement dans le plan des roues. L'extrémité inférieure du second élément écarteur est fixée sur le premier élément écarteur à une distance suffisante du siège pour que le conducteur puisse disposer ses pieds comme indiqué ci-dessus. Le second élément écarteur peut être par exemple sensiblement perpendiculaire au premier élément écarteur.

On va maintenant décrire des modes de réalisation particuliers, non limitatifs, en faisant référence aux dessins annexés dans lesquels:

— la figure 1 représente une vue en perspective du chassis d'un véhicule selon l'invention, avec un plateau en deux parties;

— la figure 2 représente une vue arrière (sans le plateau supérieur), du chassis de la figure 1;

— la figure 3 est une vue de profil de ce véhicule monté sur roues;

— la figure 4 est une vue arrière d'une fourche;

— la figure 5 est une vue en coupe selon V—V de la figure 4;

— la figure 6 est une vue partielle en coupe selon VI—VI de la figure 1 montrant le détail de la fixation d'une fourche sur le plateau transversal;

— la figure 7 est une représentation schématique en coupe, donnée à titre d'exemple, de la structure du stratifié constituant le plateau transversal muni d'un élément raidisseur;

— la figure 8 représente une vue en perspective d'un autre mode de réalisation, avec un plateau en une seule partie;

— la figure 9 est une vue de profil d'un autre mode de réalisation, avec des panneaux latéraux de fourche trapézoïdaux et des brancards réalisés d'un seul tenant avec le plateau transversal;

— la figure 10 est une vue de dessus du sulky de la figure 9;

— la figure 11 est une vue en coupe transversale, au niveau de la ferrure, d'une fourche de roue fixée à l'extrémité latérale du plateau transversal du sulky de la figure 9;

— la figure 12 est une vue partielle en coupe longitudinale selon XII—XII de la figure 10;

— et la figure 13 est une vue en coupe transversale selon XIII—XIII de la figure 12.

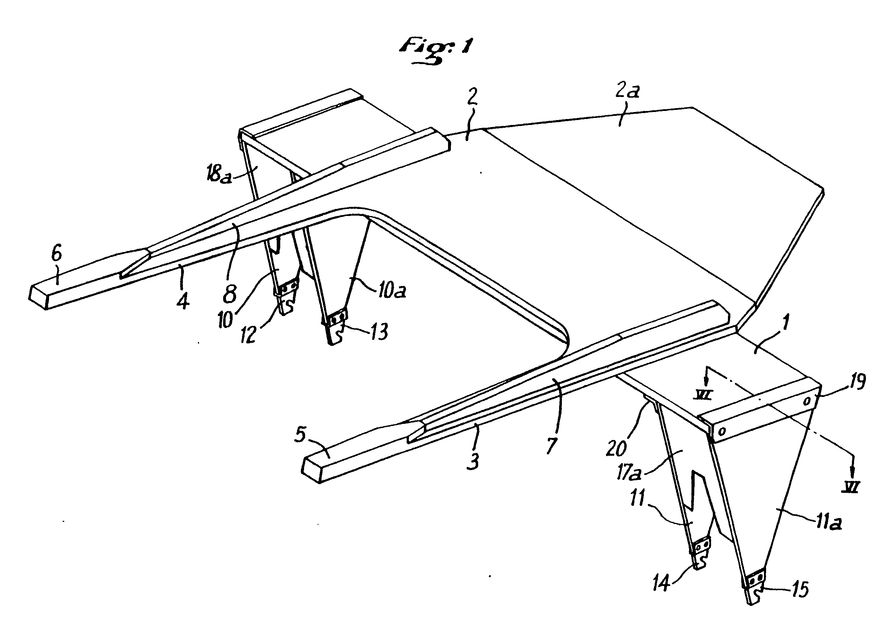

Le chassis représenté à la figure 1 comporte un plateau transversal 1 sur lequel est fixé, par exemple à l'aide de boulons, le plateau supérieur 2. La mise en place du plateau 2 sur le plateau 1 peut être facilitée grâce à des pions de centrage (non représentés). Le plateau 2 est prolongé vers l'avant par deux bras ou longerons 3, 4. L'extrémité avant des longerons comporte une surépaisseur 5, 6. Les longerons comportent également une nervure de rigidité 7, 8. On voit que l'extrémité arrière 2a du plateau supérieur 2, destinée à recevoir un ou deux sièges, est légèrement inclinée vers le haut de façon à améliorer la position du conducteur et de son passager éventuel.

A chaque extrémité du plateau transversal est fixée une fourche (10, 10a), (11, 11a) pour la fixation des roues au moyen des ferrures 12, 13, 14, 15.

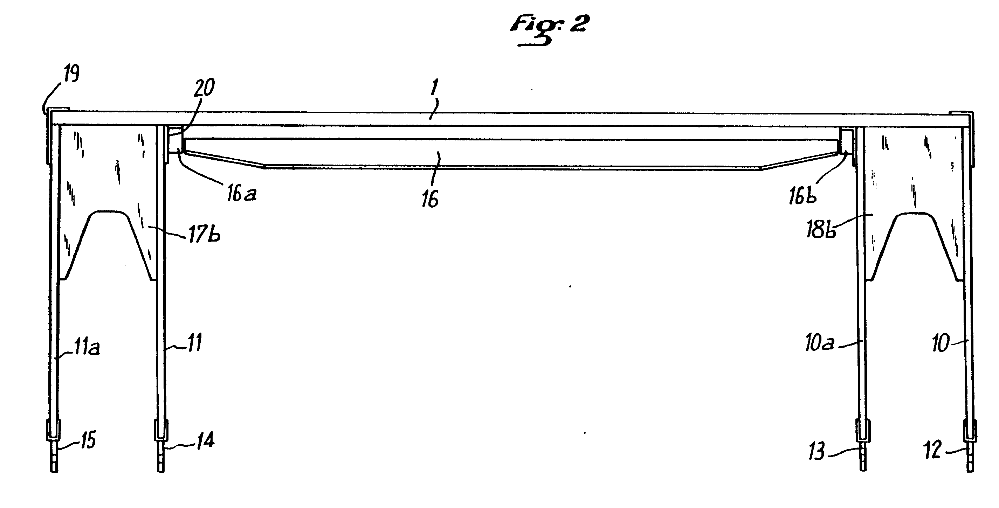

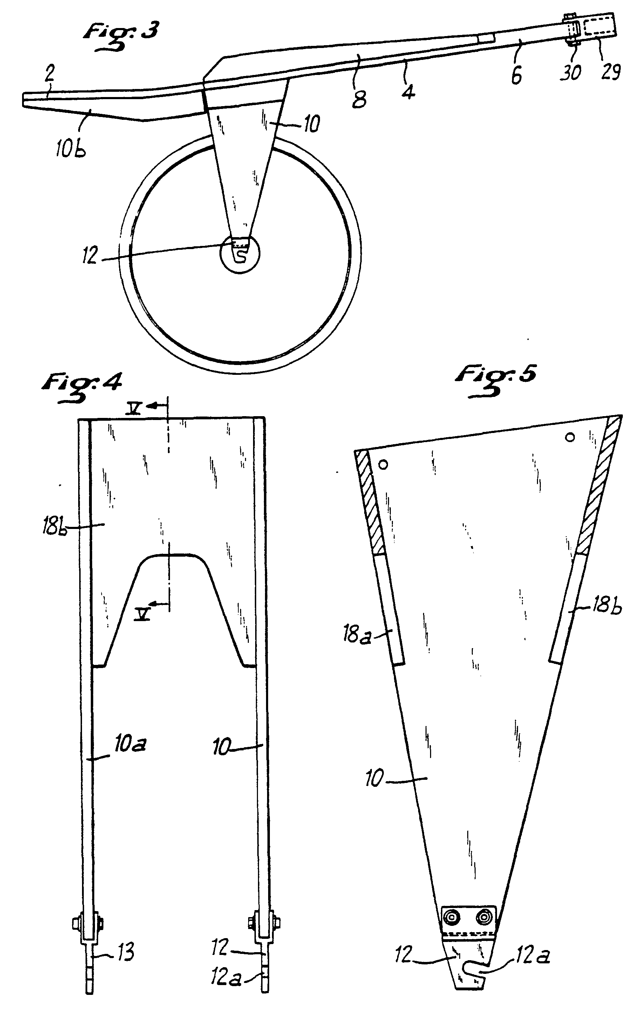

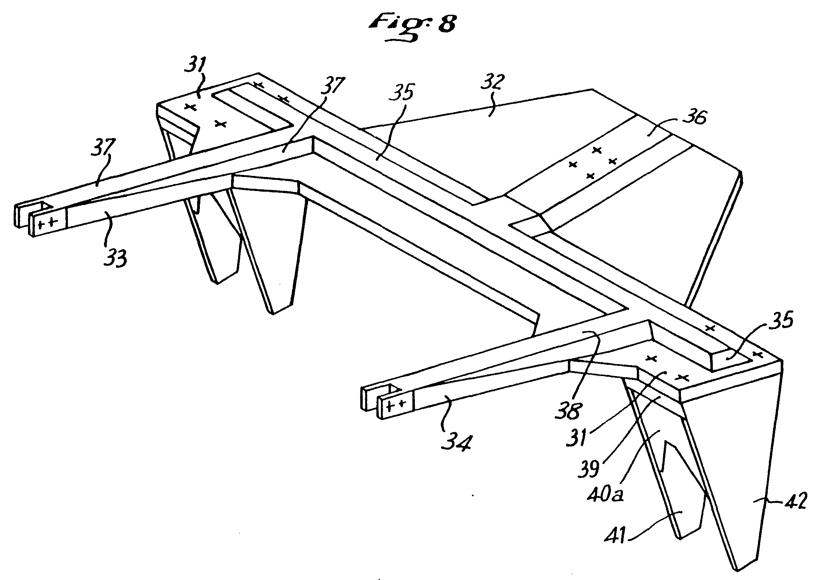

On voit sur les figures 2 et 7 que le plateau transversal 1 comporte un élément raidisseur 16 (nervure) permettant d'améliorer la rigidité dudit plateau. Deux éléments raidisseurs latéraux 16a, 16b analogues sont également prévus à l'arrière du plateau supérieur (figures 2 et 3).

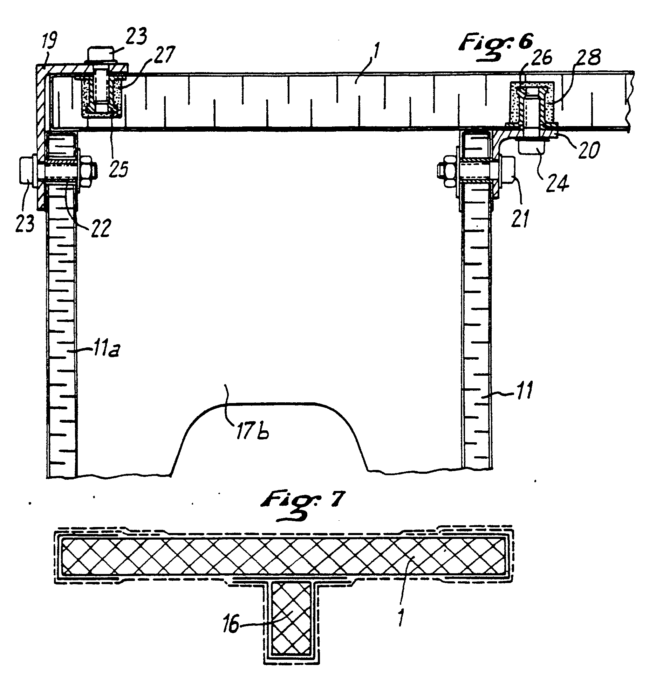

On voit sur les figures 1, 2, 4 et 5 que les panneaux latéraux tels que 10, 10a d'une fourche sont maintenus à l'aide d'éléments écarteurs avant et arrière 18a et 18b formant entretoise et ayant une forme adaptée pour laisser le passage de la roue. De même, la fourche (11, 11a) est munie d'éléments écarteurs analogues avant et arrière 17a et 17b. Les ferrures telles que 12 comportent un logement 12a pour l'axe de roue (figures 4 et 5).

Chaque fourche telle que 11, 11a est fixée au plateau transversal grâce aux cornières 19, 20.

On voit sur la figure 6 que la cornière 19 est fixée sur le panneau 11a de la fourche grâce à un insert métallique lisse 22 permettant le passage de la vis 23. La cornière 20 est fixée au panneau 11 de façon analogue avec la vis 21. De même, les cornières 19 et 20 sont fixées au plateau 1 respectivement à l'aide des vis 23, 24 grâce à l'insert métallique fileté 25, 26 fixé par collage dans l'évidement 27, 28.

On voit sur la figure 3 qu'il est possible d'adapter à l'extrémité des longerons tels que 6 un boîtier 29 (représenté en coupe) fixé par un boulon 30, et comportant à son extrémité antérieure un logement permettant l'insertion des brancards (non représentés) qui sont fixés audit boîtier par des moyens de fixation appropriés (boulon+écrou).

Les inserts métalliques, de même que les cornières, les ferrures et les boîtiers de fixation tels que 29 sont réalisés par exemple en aluminium.

On voit sur la figure 7 que le plateau transversal 1 et la nervure de rigidité 16 sont réalisés sous forme de panneaux en mousse rigide synthétique représentée en traits croisés (polychlorure de vinyle, polyéthylène, polyuréthane etc...) recouverts de couches de tissu de verre (par exemple 2 couches de tissu de verre de 0,3 mm d'épaisseur symbolisées par un trait interrompu) et renforcés aux extrémités et aux liaisons entre les panneaux par un tissu de fibres de carbone (par exemple deux couches de 0,2 millimètres d'épaisseur symbolisées par un trait continu). Une technique analogue, d'ailleurs classique, est utilisée pour la réalisation et la jonction des divers éléments de structure en matériau composite. Les éléments stratifiés sont fabriqués selon les techniques classiques, par exemple à l'aide d'un moule à une face. La tissu est appliqué sur la mousse rigide et fixé à l'aide d'une résine appliquée au pinceau, par exemple une résine époxy comportant un accélérateur et un durcisseur usuel. On peut aussi utiliser des tissus commerciaux préimprégnés avec la résine. On peut appliquer ensuite sur le tissu un "gel coat" qui donne à la pièce un aspect fini. L'ensemble est ensuite soumis à un traitement thermique à température généralement inférieure à 120°C.

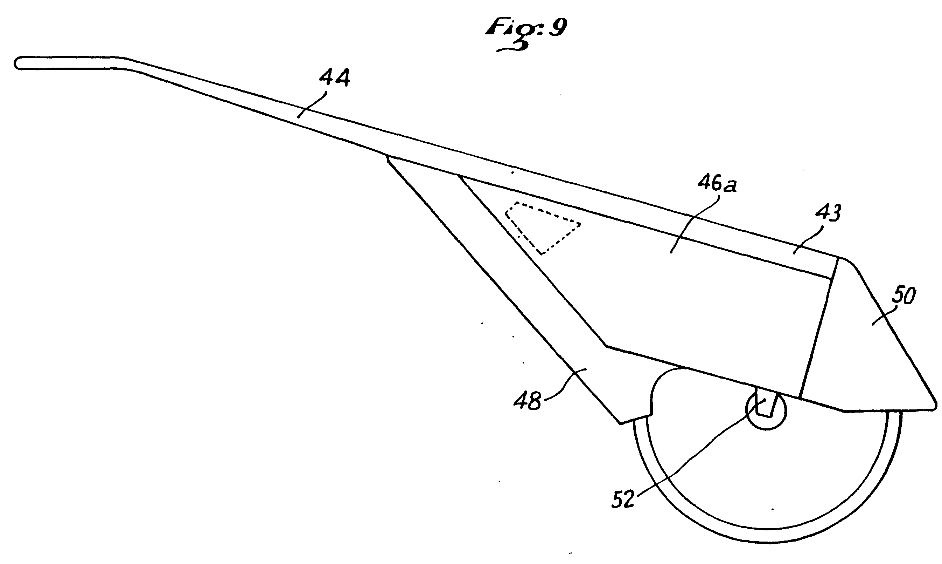

Le sulky représenté à la figure 8 est réalisé avec un plateau unique 31 comportant vers l'arrière un prolongement médian 32 et prolongé vers l'avant par deux bras longitudinaux 33, 34. La partie 32 est légèrement inclinée vers le haut, d'un angle de 15° par rapport au plan du plateau 31.

Les bras longitudinaux 33, 34 sont adaptés à leur extrémité avant pour recevoir des brancards amovibles. Les plateaux 31, 32 et les bras 33, 34 sont munis sur leur face supérieure de nervures de rigidité 35, 36, 37, 38.

Chaque fourche de roue comporte une embase telle que 39, deux panneaux latéraux tels que 41, 42, et deux éléments écarteurs avant et arrière tels que 40a (élément écarteur avant) et 40b (élément écarteur arrière non visible sur la figure 8).

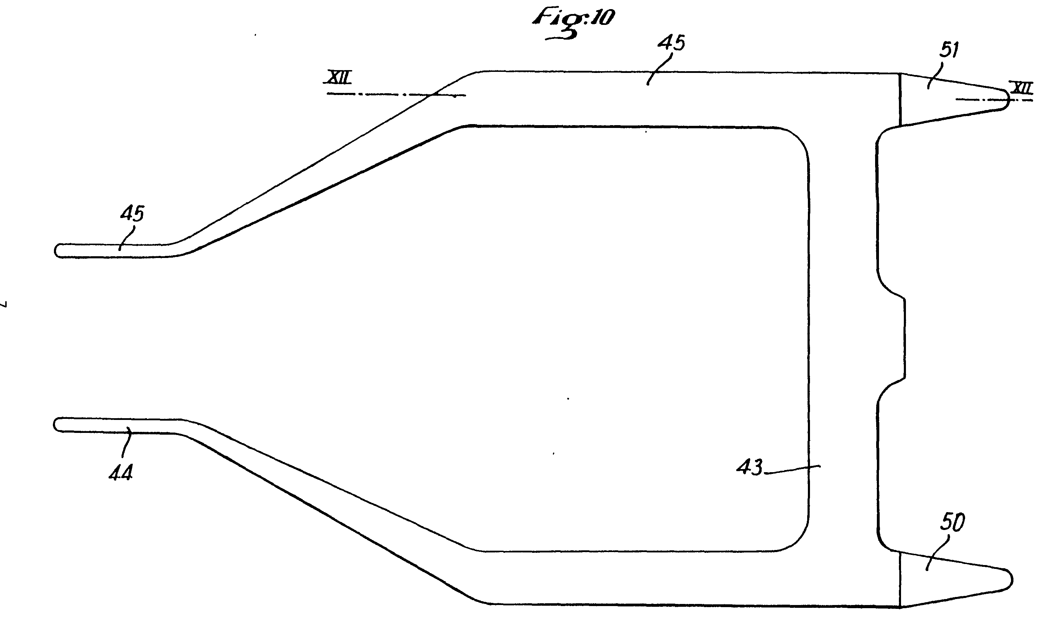

Les trous de fixation du siège sont représentés par des croix sur la nervure 36. Les trous de fixation des fourches sont représentés par des croix sur le plateau 31. Les trous de fixation des brancards amovibles sont représentés par des croix à l'extrémité avant des bras latéraux 33, 34. Tous les éléments du sulky représenté à la figure 9 sont réalisés en matériau stratifié composite. Pour fixer les fourches, on assemble d'abord le panneau 39 avec les éléments écarteurs tels que 40, puis les panneaux latéraux 41 et 42 sont assemblés sur l'ensemble ainsi formé. Le tout est ensuite fixé sur la face inférieure du plateau 31, par exemple à l'aide de boulons et d'écrous.

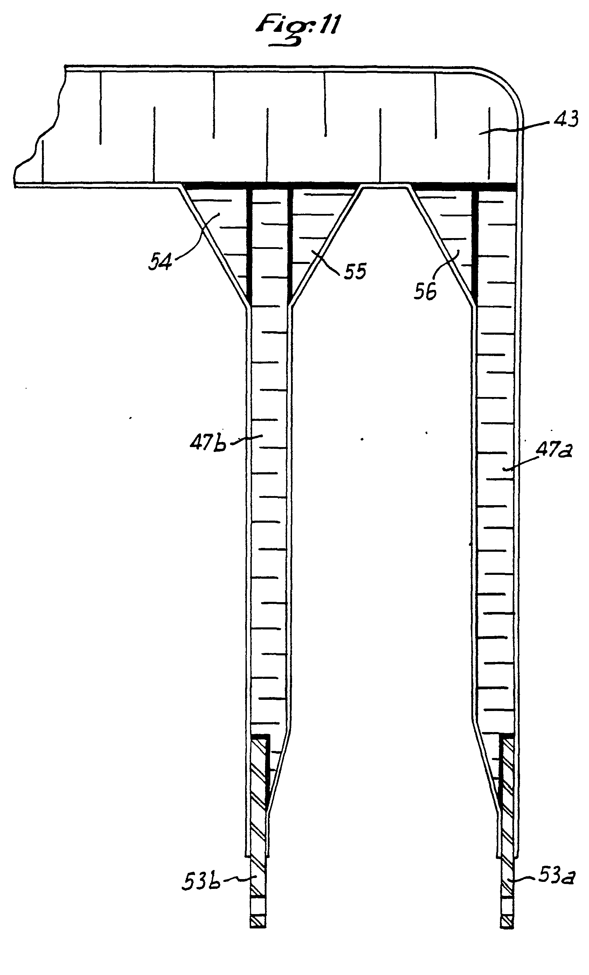

Le sulky représente aux figures 9 à 13 comporte un plateau transversal 43 réalisé d'une seule pièce avec les brancards 44, 45. Les fourches comportent chacune deux panneaux latéraux trapézoïdaux tels que les panneaux externe 46a et interne 46b (non visible) de la fourche située du côté gauche du véhicule, et les panneaux externe 47a et interne 47b de la fourche située du côté droit. Chaque fourche est munie d'un carénage avant 48, 49 et arrière 50, 51. Les lignes de séparation entre le panneau 46a et le carénage arrière 50 ou avant 48 sont indiquées sur le figure 9 pour la compréhension du dessin mains ne sont pas visibles sur le sulky terminé, après la pose des revêtements stratifiés. Le carénage arrière ne laisse pas dépasser les roues. Au voisinage de l'extrémité arrière de leur base, les panneaux latéraux sont munis de ferrures telles que 52, 53a, 53b pour la fixation des roues.

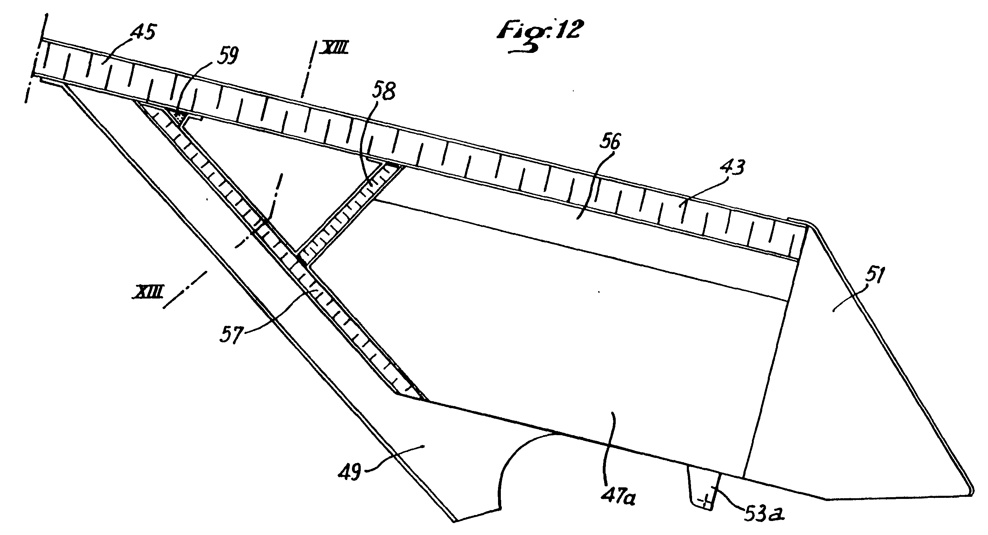

Les panneaux de mousse 43, 47a, 47b sont assemblés par collage avec une colle Araldite (marque déposée pour une colle époxy). Les zones de collage sont indiquées par un trait épaissi sur la figure 11. Les différents assemblages perpendiculaires sont renforcés par des profilés triangulaires tels que 54, 55, 56 en mousse collée. Les ferrures 53a, 53b sont collées dans des logements pratiqués dans la mousse des panneaux 47a, 47b. Les tissus enduits de résine, symbolisés par un trait continu entourant la structure de mousse, sont appliqués sur cette structure de mousse et recouvrent les faces internes et externes des fourches et du plateau ainsi que toute la surface des brancards. Les ferrures de roues sont partiellement recouvertes, sur leur partie supérieure, par ces revêtements de tissu imprégné.

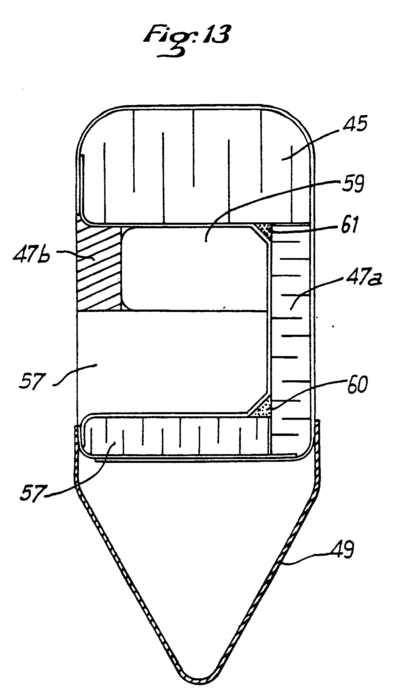

Chaque fourche telle que (47a, 47b) est munie d'un premier élément écarteur rectangulaire tel que 57 disposé le long des côtés avant de la fourche (figure 12), depuis la face inférieure du brancard 45 jusqu'à la base des panneaux latéraux 47a, 47b. Un second élément écarteur rectangulaire 58 s'étend entre les panneaux latéraux 47a, 47b, perpendiculairement au premier élément écarteur 57. Le second élément écarteur, dont la base s'appuie sur l'élément écarteur 57, est donc incliné vers l'arrière depuis sa base jusqu'à son extrémité supérieure qui coïncide avec la face inférieure du brancard 45. Les éléments écarteurs, tout comme les autres éléments sont réalisés en mousse rigide et sont revêtus de tissus imprégnés symbolisés par des traits continus sur la figure 12. Les deux éléments écarteurs délimitent donc un coffrage de section triangulaire à l'extrémité supérieure avant de la fourche.

Grâce à une découpe, par exemple de forme trapézoïdale, réalisée dans les panneaux intérieurs 46b et 47b, ce coffrage peut faire office de cale-pied. La forme de la découpe est représentée en pointillés sur la figure 9.

Le bord postérieur de la découpe est réalisé le long de la face avant de l'écarteur 58. Le bord inférieur de la découpe est réalisé le long de la face supérieure de l'écarteur 57. Le bord supérieur de la découpe est parallèle au bord inférieur du brancard. Le conducteur peut donc introduire ses pieds dans le coffrage de section triangulaire, en prenant appui sur la face supérieure de l'écarteur 57. L'introduction des pieds dans ce coffrage, et leur retrait, est plus facilement effectué qu'avec les cale-pieds classiques.

La présence de l'écarteur 58 à l'arrière du coffrage protège celui-ci contre les projection d'eau ou de boue provoquées par les roues. Ce système de cale-pieds représente donc pour le conducteur un élément de confort et de sécurité.

Sur la figure 13, qui représente une section du coffrage pour cale-pied, on a représenté par des traits continus les recouvrements des tissus interne et externe. A l'intérieur du coffrage, les différentes jonctions sont adoucies par des coins en mastic chargé de fibre de verre tels que 59, 60, 61. Ces coins facilitent le revêtement à l'aide des tissus, en évitant les angles droits ou aigus.

Des éléments écarteurs analogues à ceux qui viennent d'être décrits, permettant la réalisation de cale-pieds, peuvent également être utilisés dans le cas des panneaux latéraux de fourche triangulaires, à condition que lesdits panneaux triangulaires aient une forme allongée vers l'avant, c'est-à-dire que le bord avant de ces panneaux latéraux rejoigne la face inférieure du brancard suffisamment en avant des roues, et que la naissance des brancards sort dans le plan des roues.

## Revendications

1. Véhicule à deux roues du type sulky, qui comprend un plateau transversal, en matériau composite, comportant vers l'avant deux prolongements latéraux constituant les brancards ou l'amorce des brancards, ledit plateau transversal étant muni d'un siège ou de moyens de fixation d'un siège pour le conducteur, et étant assemblé avec deux fourches pour la fixation des roues, caractérisé par le fait que chaque fourche, réalisée en matériau composite, a une structure de coffrage et comprend deux panneaux latéraux en regard (11, 11a; 41, 42; 47a, 47b) reliés par au moins deux éléments écarteurs (17a, 17b; 40a, 40b; 57, 58) transversaux en forme de plaques.

2. Véhicule selon la revendication 1, caractérisé par le fait que la partie postérieure de chaque brancard est située dans le plan de la roue correspondante.

3. Véhicule selon la revendication 1 ou 2, caractérisé par le fait que les panneaux latéraux (11, 11a) ont une forme sensiblement triangulaire, et sont fixés à la face inférieure du plateau transversal (1) par un de leurs côtés, le sommet opposé audit côté constituant l'extrémité inférieure du panneau.

4. Véhicule selon la revendication 3, caractérisé par le fait que lesdits panneaux triangulaires ont une forme allongée vers l'avant.

5. Véhicule selon le revendication 1 ou 2, caractérisé par le fait que chaque panneau latéral (47a, 47b) a une forme trapézoïdale, la grande base du trapèze étant fixée sur la face inférieure du plateau transversal (43) et du prolongement avant correspondant (45), tandis que la petite base constitue la partie inférieure du panneau, étant entendu que l'extrémité avant de la grande base est située plus en avant que l'extrémité avant de la petite base.

6. Véhicule selon la revendication 3 ou 4, caractérisé par le fait que chaque fourche comprend deux éléments écarteurs rectangulaires situés en avant des roues: un premier élément écarteur (57) situé le long du côté avant des panneaux latéraux (47a, 47b) et un second élément écarteur (58) incliné vers l'arrière depuis son côté inférieur fixé sur le premier élément écarteur jusqu'à son côté supérieur fixé sur la face inférieure du prolongement avant (45) du panneau transversal (43).

7. Véhicule selon la revendication 6, caractérisé par le fait que le panneau latéral intérieur (47b) comporte, dans le coffrage de section triangulaire formé par les éléments écarteurs à l'extrémité avant de la fourche, une ouverture constituant un logement pour le pied du conducteur, de façon que le pied puisse prendre appui sur le premier élément écarteur (57).

8. Véhicule selon l'une quelconque des revendications 4 à 7, caractérisé par le fait qu'il comprend un élément de carénage avant (49) reliant les côtés avant des deux panneaux de la fourche.

9. Véhicule selon l'une quelconque des revendications 4 à 8, caractérisé par le fait qu'il comprend un élément de carénage arrière reliant les côtés arrière des deux panneaux de la fourche.

## Patentansprüche

1. Fahrzeug mit zwei Rädern des Sulky-Typs, das eine Querplatte aus Verbundmaterial aufweist, die nach vorne zwei seitliche Verlängerungen hat, die die Deichseln oder das Anfangsstück der Deichseln bilden, wobei die Querplatte mit einem Fahrersitz oder mit Befestigungsmitteln für einen Fahrersitz versehen ist und mit zwei Gabeln für die Befestigung der Räder zusammengebaut ist, dadurch gekennzeichnet, daß jede Gabel, die aus Verbundmaterial hergestellt ist, Schalenbauweise aufweist und zwei gegenüberliegende Seitenplatten (11, 11a; 41, 42; 47a, 47b) umfaßt, die mittels mindestens zweier querverlaufender, plattenförmiger Spreizelemente (17a, 17b; 40a, 40b; 57, 58) verbunden sind.

2. Fahrzeug nach Anspruch 1, dadurch gekennzeichnet, daß der hintere Teil einer jeden Deichsel in der Ebene des entsprechenden Rades liegt.

3. Fahrzeug nach Anspruch 1 oder 2, dadurch gekennzeichnet, daß die Seitenplatten (11, 11a) eine im wesentlichen dreieckige Form aufweisen und mit einer ihrer Seiten an der Unterfläche der Querplatte (1) befestigt sind, wobei der der genannten Seite gegenüberliegende Scheitel das untere Ende der Platte bildet.

4. Fahrzeug nach Anspruch 3, dadurch gekennzeichnet, daß dreieckigen Platten eine nach vorne verlängerte Form aufweisen.

5. Fahrzeug nach Anspruch 1 oder 2, dadurch gekennzeichnet, daß jede Seitenplatte (47a, 47b) trapezförmig ist, wobei die größe Basis des Trapezes an der Unterfläche der Querplatte (43) und der entsprechenden vorderen Verlängerung (45) befestigt ist, während die kleine Basis den unteren Teil der Platte bildet, wobei festliegt, daß das vordere Ende der großen Basis weiter vorne liegt als das vordere Ende der kleinen Basis.

6. Fahrzeug nach Anspruch 3 oder 4, dadurch gekennzeichnet, daß jede Gabel zwei rechtwinklige Spreizelemente umfaßt, die vor den Rädern gelagert sind: ein erstes Spreizelement (57), das längs der vorderen Seite der Seitenplatten (47a, 47b) angeordnet ist, und ein zweites Spreizelement (58), das von seiner unteren Seite, die auf dem ersten Spreizelement befestigt ist, nach hinten bis zu seiner oberen Seite geneigt ist, die auf der Unterfläche der vorderen Verlängerung (45) der Querplatte (43) befestigt ist.

7. Fahrzeug nach Anspruch 6, dadurch gekennzeichnet, daß die innere Seitenplatte (47b) in der Verschalung mit dreieckigem Querschnitt, die von den Spreizelementen am vorderen Ende der Gabel gebildet ist, eine Öffnung aufweist, die eine Aufnahme für den Fuß des Fahrers bildet, und zwar auf solche Weise, daß der Fuß gegen das erste Spreizelement (57) anliegen kann.

8. Fahrzeug nach irgendeinem der Ansprüche 4 bis 7, dadurch gekennzeichnet, daß es ein vorderes Verkleidungselement (49) aufweist, das die Vorderseiten der beiden Platten der Gabel verbindet.

9. Fahrzeug nach irgendeinem der Ansprüche 4 bis 8, dadurch gekennzeichnet, daß es ein hinteres Verkleidungselement aufweist, das die Rückseiten der beiden Platten der Gabel verbindet.

## Claims

1. A two-wheeled vehicle of sulky type, which comprises a transverse board of composite material having two lateral extensions towards the front to form the shafts or the beginning of the shafts, the said transverse board being equipped with a seat or with means of attaching a seat for the driver and assembled with two forks for attaching the wheels, characterized by the fact that each fork is made of composite material and has a box structure and comprises two facing side-panels (11, 11a; 41, 42; 47a, 47b) connected by at least two transverse spacer members (17a, 17b; 40a, 40b; 57, 58) in the form of plates.

2. A vehicle as in Claim 1, characterized by the fact that the rear portion of each shaft is located in the plane of the corresponding wheel.

3. A vehicle as in Claim 1 or 2, characterized by the fact that the side-panels (11, 11a) have a substantially triangular shape and are attached to the lower face of the transverse board (1) by one side, the apex opposite the said side forming the bottom end of the panel.

4. A vehicle as in Claim 3, characterized by the fact that the said triangular panels have a shape elongated towards the front.

5. A vehicle as in Claim 1 or 2, characterized by the fact that each side-panel (47a, 47b) has a trapezoidal shape, the longer base of the trapezium being attached to the lower face of the transverse board (43) and corresponding front extension (45) whilst the shorter base forms the bottom portion of the panel, it being understood that the front end of the longer base is located further forward than the front end of the shorter base.

6. A vehicle as in Claim 3 or 4, characterized by the fact that each fork comprises two rectangular spacer members located in front of the wheels; a first spacer member (57) located along the front edges of the side-panels (47a, 47b) and a second spacer member (58) sloping towards the rear from its bottom edge attached to the first spacer member up to its top edge attached to the lower face of the front extension (45) from the transverse board (43).

7. A vehicle as in Claim 6, characterized by the fact that the inner side-panel (47b) in the box structure of triangular section formed by the spacer members at the front end of the fork, has an opening forming a place for the driver's foot so that the foot can bear against the first spacer member (57).

8. A vehicle as in any one of the Claims 4 to 7, characterized by the fact it includes a front stream-lining member (49) connecting the front edges of the two panels of the fork.

9. A vehicle as in any one of the Claims 4 to 8, characterized by the fact it includes a rear stream-lining member connecting the rear edges of the two panels of the fork.

Fig. 1

Fig. 2

EP 0 287 606 B1

*Fig. 3*

2
10b
10
12
8
4
6
30
29

*Fig. 4*

V

18b
10a
10
13
12
12a
V

*Fig. 5*

18a
18b
10
12
12a

*Fig. 6*

19   23   27   1

25

23   22

11a

11

17b

*Fig. 7*

26   28

20

24

21

16   1

Fig. 8

EP 0 287 606 B1

Fig.9

50

43

46a

52

48

44

*Fig:10*

XII

45

51

XII

45

44

43

50

EP 0 287 606 B1

## Fig.11

Fig. 12

EP 0 287 606 B1

Fig. 13